# EUROPÄISCHE PATENTANMELDUNG

(11) **EP 3 243 586 A1**
(43) Veröffentlichungstag der Anmeldung: **15.11.2017**
(21) Anmeldenummer: 16169023.5
(22) Anmeldetag: 10.05.2016
(51) Int. Cl.: B22F 5/10, C22C 33/02, F16C 33/10, F16C 33/12

(54) **SINTEREISENLAGER**

(71) Anmelder: SL Gleitlagertechnik GmbH, 35043 Marburg (DE)
(72) Erfinder: Metzger, Björn, 35279 Neustadt (DE)
(74) Vertreter: Patentanwälte Walther Hinz Bayer PartGmbB

(57) **Zusammenfassung**

Gegenstand der Erfindung ist ein Sintereisenlager hergestellt aus einem im Wesentlichen kupferfreien eisenbasierten Sinterwerkstoff.

## Beschreibung

Die vorliegende Erfindung betrifft ein Sintereisenlager.

Sinterlager sind eine Variante der Gleitlager, bei denen die Lager nicht aus massivem, sondern aus porösem, gesintertem Material bestehen. Hierbei ist Sinterbronze eines der gebräuchlichsten Materialien aber auch Sintereisen wird häufig zur Herstellung verwendet, was sich schlussendlich als eine eisenbasierte Legierung darstellt. Die Rezeptur des zu sinternden Materials kann in weiten Grenzen variiert werden. Hierbei ist auch bekannt, Schwermetalle, wie z. B. Blei zu verwenden, um bei Mangelschmierung begrenzte Notlaufeigenschaften zu gewährleisten. Allerdings werden nicht nur durch die Zugabe von beispielsweise Blei die Notlaufeigenschaften verbessert, eine triboelektrische Optimierung des Sinterwerkstoffes findet auch durch den Anteil an Kohlenstoff, Aluminium und Kupfer statt. Insbesondere ein hoher Anteil von Kupfer ist geeignet, einem eisenbasierten Sinterlager gute Notlaufeigenschaften zu vermitteln. Darüber hinaus hat Kupfer, ähnlich wie Aluminium auch, den Vorteil, dass es als niedrig schmelzende Phase während des Sintervorgangs in der Lage ist, Eisenpartikel einzubauen. Die Herstellung von gesinterten Lagern erfolgt durch Pressen von entsprechenden Metallpulvermischungen unter hohem Druck. Die hierbei entstehenden Grünlinge werden anschließend unter Schutzgasatmosphäre gesintert. Derartige gesinterte Lager weisen in Abhängigkeit von Druck und Temperatur ein höheres oder ein geringeres Porenvolumen auf, das üblicherweise zwischen 5 und 30 % besteht. Die Poren werden mit Schmierstoffen, insbesondere Öl, getränkt, wobei das Öl in den Poren ein Öldepot bildet. Hiermit steht ein etwa 10-fach größerer Ölvorrat als bei massiven Gleitlagern zur Verfügung. Bei üblichen Gleitlagern ist der Schmierstoffvorrat durch das Lagerspaltvolumen begrenzt. Da das Öl innerhalb der Lagerschalenkörper eines Sintereisenlagers fließen kann, wird hierdurch die gesamte Gleitfläche mit einer ausreichenden Schmierstoffmenge versorgt.

Die Frage der Notlaufeigenschaft eines Sintereisenlagers ist allerdings von nachrangiger Bedeutung, da aufgrund der Porosität eines solchen Sintereisenlagers grundsätzlich immer davon auszugehen ist, dass über einen längeren Zeitraum genügend Schmiermittel zur Verfügung steht. Solche Sintereisenlager weisen einen Reibwert µ zwischen 0,1 und 0,08 auf.

Die der Erfindung zugrunde liegende Aufgabe besteht darin, diesen Reibwert weiterhin zu reduzieren, das heißt schlussendlich den Verschleiß zu vermindern mithin die Lebensdauer zu erhöhen.

Zur Lösung der Aufgabe wird bei einem Sintereisenlager erfindungsgemäß vorgeschlagen, dass der eisenbasierte Sinterwerkstoff im Wesentlichen kupferfrei ist. Unter einem Sinterwerkstoff wird im folgenden ein Werkstoff verstanden, der zur Herstellung des sogenannten Grünlings dient. Bei einem eisenbasierten Sinterwerkstoff ist der überwiegende Bestandteil an dem Sinterwerkstoff Eisen. Der Eisenanteil in Gew.-% liegt hierbei üblicherweise bei weit über 80 %. Der eisenbasierte Sinterwerkstoff ist, wie ausgeführt, im Wesentlichen kupferfrei. Unter "im Wesentlichen kupferfrei" wird verstanden, dass in dem Werkstoff, bis auf etwaige Verunreinigungen, kein Kupfer enthalten ist. Insofern liegt der Kupferanteil unter 0,3 Gew.-%, vorzugsweise unter 0,2 Gew.-%. Der Sinterwerkstoff weist darüber hinaus vorteilhaft Zusätze an Chrom, Mangan und Molybdän auf, sowie die gegebenenfalls weiteren Zusätze in Form von Kohlenstoff, Silicium oder Aluminium. Die Porosität steht in Abhängigkeit von Druck und Temperatur. Ein hohes Porenvolumen wird immer dann angestrebt, wenn hohe Drehzahlen bei geringen Lasten durch das Lager aufgenommen werden müssen. Dementsprechend wird ein niedriges Porenvolumen bei hohen Lasten und geringer Drehzahl angestrebt, da die tragende Fläche in diesem Fall größer ist.

Das Sinterlager ist vorzugsweise mit einem ölbasierten Schmierstoff getränkt, allerdings besteht auch die Möglichkeit, ein solches Sinterlager mit einem Schmierstoff auf Flüssigkristallbasis zu tränken. In diesem Zusammenhang wurde herausgefunden, dass bei CU-Gehalten über 0,3 Gew.% ein Schmierstoff auf Flüssigkristallbasis nicht einsetzbar ist. Denkbar ist auch eine Kombination eines ölbasierten und einem flüssigkristallbasiertem Schmierstoff zum Tränken eines Sintereisenlagers.

Mit solchen ölbasierten, schmierstoffgetränkten Sintereisenlagern bzw. auch bei solchen Sintereisenlagern, die mit einem Schmierstoff auf Flüssigkristallbasis getränkt sind, werden Reibwerte von < 0,02 erreicht.

Als besonders vorteilhaft hat sich ein eisenbasierter Sinterwerkstoff herausgestellt, der Zusätze gemäß der nachstehenden Tabelle aufweist:
Cr 1 - 14,5 Gew.-%
Mn 0,3 - 5 Gew.-%
Mo 0,1 - 4,5 Gew.- %
Cu max. 0,2 Gew.- %
C 0,2 - 2 Gew.- %
Si 0,2 - 2 Gew. - %
Al 0,0 - 1 Gew.- %
Fe Rest

Der Sinterwerkstoff für ein im Wesentlichen kupferfreies Sintereisenlager zeichnet sich nach einem vorteilhaften Beispiel durch einen Chromanteil von 1,5 Gew.- %, einem Mangananteil von 1,0 Gew.- %, einem Molybdänanteil von 0,1 Gew.- %, einem Kupferanteil von < 0,1 Gew.- %, einem Kohlenstoffanteil von 1,0 Gew.- %, einem Siliciumanteil von 0,25 Gew.- %, einem Eisenanteil von 96,1 Ges.-% aus. Zur Herstellung des Sintereisenlagers mit einem solchen Sinterwerkstoff wird der Grünling bei einer Temperatur von etwa 1.100° C und bei einem Pressdruck von 400 MPa gesintert. Hieraus ergibt sich ein Sintereisenlager mit einer Porosität von ca. 12 %. Ein solches Lager ist in der Lage, bei Drehzahlen bis zu 2.000 Umdrehungen pro Minute radiale Lasten bis zu 5 N/mm² bzw. 5 MPa aufzunehmen.

## Patentansprüche

1. Sintereisenlager hergestellt aus einem im Wesentlichen kupferfreien eisenbasierten Sinterwerkstoff.

2. Sintereisenlager nach Anspruch 1,
**dadurch gekennzeichnet,**
**dass** der Kupferanteil unter 0,2 Gew.- % beträgt.

3. Sintereisenlager nach einem der Ansprüche 1 oder 2,
**dadurch gekennzeichnet,**
**dass** der Sinterwerkstoff Zusätze von Chrom, Mangan und/oder Molybdän aufweist.

4. Sintereisenlager nach einem der voranstehenden Ansprüche,
**dadurch gekennzeichnet,**
**dass** der Sinterwerkstoff Zusätze von Kohlenstoff und/oder Silicium und/oder Aluminium aufweist.

5. Sintereisenlager nach einem der voranstehenden Ansprüche,
**dadurch gekennzeichnet,**
**dass** das Sintereisenlager eine Porosität zwischen 7 und 30 % aufweist.

6. Sintereisenlager nach einem der voranstehenden Ansprüche,
**dadurch gekennzeichnet,**
**dass** das Sintereisenlager mit auf Öl basierendem Schmierstoff getränkt ist.

7. Sintereisenlager nach einem der voranstehenden Ansprüche,
**dadurch gekennzeichnet,**
**dass** das Sintereisenlager mit einem Schmierstoff auf Flüssigkristallbasis getränkt ist.

## Geänderte Patentansprüche

### Geänderte Patentansprüche gemäss Regel 137(2) EPÜ.

1. Sintereisenlager hergestellt aus einem im Wesentlichen kupferfreien basierten Sintermetallwerkstoff,
wobei der Sintermetallwerkstoff Poren aufweist,
**dadurch gekennzeichnet,**
**dass** bei einem Kupferanteil des Sinterwerkstoffs von unter 0,2 Gew.% und mit einer Porosität zwischen 7 und 30 % Reibbeiwerte von 0,02 verwirklicht werden können.

2. Sintereisenlager nach Anspruch 1,
**dadurch gekennzeichnet,**
**dass** der Sinterwerkstoff Zusätze von Chrom, Mangan und/oder Molybdän aufweist.

3. Sintereisenlager nach einem der voranstehenden Ansprüche,
**dadurch gekennzeichnet,**
**dass** der Sinterwerkstoff Zusätze von Kohlenstoff und/oder Silicium und/oder Aluminium aufweist.

4. Sintereisenlager nach einem der voranstehenden Ansprüche,
**dadurch gekennzeichnet,**
**dass** das Sintereisenlager mit auf Öl basierendem Schmierstoff getränkt ist.

5. Sintereisenlager nach einem der voranstehenden Ansprüche,
**dadurch gekennzeichnet,**
**dass** das Sintereisenlager mit einem Schmierstoff auf Flüssigkristallbasis getränkt ist.
